# EUROPEAN PATENT APPLICATION

(11) **EP 4 572 126 A1**
(43) Date of publication of application: **18.06.2025**
(21) Application number: 23217182.7
(22) Date of filing: 15.12.2023
(51) Int. Cl.: H02P 21/14

(54) **A METHOD FOR DETERMINING A REFERENCE STATOR FLUX VALUE IN A MOTOR CONTROL SCHEME**

(71) Applicant: Polestar Performance AB, 405 31 Göteborg (SE)
(72) Inventor: LAURELL, Jakob, 422 51 Hisings Backa (SE); HU, Yifei, 417 62 Göteborg (SE); HOFWIMMER, Rasmus, 413 16 Göteborg (SE)
(74) Representative: Zacco Sweden AB

(57) **Abstract**

The present inventive concept relates to a method (100) and device (300) for determining a reference stator flux value in a motor control scheme for use in control of a permanent magnet synchronous motor. The method (100) comprises: (i) obtaining (S102) an actual dq-axis current value; (ii) obtaining (S104) a reference dq-axis current value; and (iii) determining (S106) the reference stator flux value based on a difference between the actual dq-axis current value and the reference dq-axis current value. The present inventive concept further relates to a method (200) and device (400) for controlling a permanent magnet synchronous motor by a closed loop motor control scheme.

## Description

### TECHNICAL FIELD

The disclosed technology relates to the field of electric motor control, and in particular to a method, device and computer program product for determining a reference stator flux value in a motor control scheme for use in control of a permanent magnet synchronous motor.

### BACKGROUND

Electric motors are fundamental components in a wide range of applications, from industrial machinery to electric vehicles and household appliances. To optimize their performance and efficiency, various control techniques have been developed over the years. Field-oriented control (FOC) is one such method that has gained significant attention within the field of electric motor control.

Field-oriented control is a technique used e.g. for Permanent Magnet Synchronous Motor (PMSM), that aims to decouple the control of the magnetic field and torque in electric motors. By aligning the rotor magnetic field with the stator magnetic field, FOC can ensure that the motor operates at optimal efficiency across a wide range of operating conditions. This level of control allows for smooth and precise regulation of motor speed and torque, making it an ideal choice for many applications where accuracy and efficiency are paramount, such as in electric vehicles.

These motors often need to operate over a wide range of speeds and load conditions, and controlling their performance under these dynamic conditions is of paramount importance. When given a certain torque request, the electric motor is limited by the current amplitude that can be supplied to the stator (typically due to motor windings and inverter hardware only being designed for certain maximum current) and the so called voltage limit ellipse (also known as flux limit). There is a risk of reaching a failing point in which the requested control signal cannot be achieved. A possible way of avoiding this is to simply reduce the requested reference flux by a safety margin such that the stator voltage and/or current never reaches its maximum. However, this also leads to reduced voltage utilization and power output of the motor. There is therefore need for improvements within this field.

### SUMMARY

The herein disclosed technology seeks to mitigate, alleviate or eliminate one or more of the above-identified deficiencies and disadvantages in the prior art to address various problems relating to motor control of permanent magnet synchronous motors.

More specifically, the proposed solution deals with the limit caused by the voltage limit ellipse through a new and improved way of implementing a flux controller of a motor control scheme. Compared to traditional flux controllers which are implemented with a stator voltage feedback, the proposed solution also builds upon a stator current feedback. In other words, the presently disclosed technology is at least partly based on taking the current controller's ability to regulate the currents into account, when determining the reference stator currents. This can be achieved through the reference stator flux value determined according to the principles described herein. This can help in ensuring the controllability of the currents, as well as prevent loss of control by ensuring that the requested current value stays within the ellipse. Moreover, the presently disclosed technology can provide for increased voltage utilization and torque output (i.e. pushing more power out of the motor). In other words, it may allow for using as much as possible from the ellipse.

Various aspects and embodiments of the disclosed technology are defined below and in the accompanying independent and dependent claims.

According to a first aspect, there is provided a method for determining a reference stator flux value in a motor control scheme for use in control of a permanent magnet synchronous motor. The method comprises (i) obtaining an actual dq-axis current value. The method further comprises (ii) obtaining a reference dq-axis current value. The method further comprises (iii) determining the reference stator flux value based on a difference between the actual dq-axis current value and the reference dq-axis current value.

As stated above, the presently disclosed technology may be advantageous in the way the flux controller can determine the reference stator flux value based on what dq-axis currents are achievable. Moreover, the proposed flux controller can push the reference stator flux value towards the biggest possible value at which control of the dq-axis currents can still be maintained. More specifically, the reference stator flux value can be limited if it gets close to the limit of what the current controller can achieve, or be increased when possible to get as much flux as possible.

In general, the proposed method may help towards optimizing the power output of the motor in that it increases the voltage utilization, while still maintaining control. Thus, an improved power output capability can be achieved.

The reference stator flux value may be determined in view of a comparison between the difference and a defined threshold value. The defined threshold value may be used to defining how much the actual dq-axis current is allowed to deviate from the reference dq-axis current. This threshold may allow for preventing the controller from acting on noise, thereby leading to a more robust control of the motor. Moreover, it may serve the purpose of defining a rate at which the controller can increase the reference stator flux value to push the output torque higher, while the reference signals are still achievable.

Determining the reference stator flux value may comprise providing a control signal, indicative of the comparison between the difference and the defined threshold value, as input to a PI controller configured to output the reference stator flux value based on said difference. More generally, the control signal may be indicative of the difference between the actual dq-axis current value and the reference dq-axis current value. Additionally, the defined threshold value may be provided to the PI controller. Thereby, the controller can push the reference stator flux to the highest possible value, while the current controller can maintain control.

The steps denoted (i) to (iii) may be performed iteratively in a closed loop control scheme. Thereby, the reference stator flux value can be continuously refined and adapt to changes in the motor, the input, or the control scheme.

In response to the difference being below the defined threshold value, the reference stator flux value of a present loop may be determined by increasing a reference stator flux value of a previous loop of the closed loop control scheme, the previous loop being performed prior to the present loop. Thus, the reference stator flux value can be increased when there is available and unused capability in the motor control, thereby increasing the voltage utilization and power output of the motor.

In response to the difference being above the defined threshold value, the reference stator flux value of a present loop may be determined by decreasing a reference stator flux value of a previous loop of the closed loop control scheme, the previous loop being performed prior to the present loop. Thus, the reference stator flux value can be reduced to allow the current controller to maintain (or regain) control, thereby reducing the risk of reaching a failing point of unachievable dq-axis currents.

The reference dq-axis current value obtained in a present loop may be determined based on a reference stator flux value of a previous loop and a reference torque, the previous loop being performed prior to the present loop.

The reference stator flux value may be determined for use in subsequent determination of an updated reference dq-axis current value.

According to a second aspect, there is provided a computer program product comprising instructions which, when the program is executed by a computing device, causes the computing device to carry out the method according to the first aspect. The above-mentioned features and advantages of the previous aspects, when applicable, apply to this second aspect as well. In order to avoid undue repetition, reference is made to the above.

According to a third aspect, there is provided a (non-transitory) computer-readable storage medium. The non-transitory computer-readable storage medium stores one or more programs configured to be executed by one or more processors of a processing system, the one or more programs comprising instructions for performing the method according to the first aspect. The above-mentioned features and advantages of the previous aspects, when applicable, apply to this third aspect as well. In order to avoid undue repetition, reference is made to the above.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a fourth aspect, there is provided a device for determining a reference stator flux value in a motor control scheme for use in control of a permanent magnet synchronous motor. The device comprises control circuitry. The control circuitry is configured to obtain an actual dq-axis current value. The control circuitry is further configured to obtain a reference dq-axis current value. The control circuitry is further configured to determine the reference stator flux value based on a difference between the actual dq-axis current value and the reference dq-axis current value.

The above-mentioned features and advantages of the previous aspects, when applicable, apply to this fourth aspect as well. In order to avoid undue repetition, reference is made to the above.

According to a fifth aspect, there is provided a method for controlling a permanent magnet synchronous motor by a closed loop motor control scheme. The method comprises (i) determining a reference stator flux value in accordance with the method according to the first aspect, based on a present actual dq-axis current value and a present reference dq-axis current value. The method further comprises (ii) determining an updated reference dq-axis current value based on a reference torque and the determined reference stator flux value. The method further comprises (iii) providing a control signal indicative of the updated reference dq-axis current value to the motor.

The proposed control scheme defined by the above method, and utilizing the reference stator flux value determined in accordance with the presently disclosed technology may provide for an improved control with increased voltage usability and output torque (i.e. increased power output).

The method may further comprise (iv) obtaining an updated actual dq-axis current value. The method may further comprise repeating the steps (i)-(iv) for a plurality of loops, wherein for each loop the updated reference dq-axis current value, as determined in a previous loop, corresponds to the present reference dq-axis current value of a present loop, and the updated actual dq-axis current value corresponds to the present actual dq-axis current value of the present loop. Thereby continuous control of the motor can be provided.

The above-mentioned features and advantages of the previous aspects, when applicable, apply to this fifth aspect as well. In order to avoid undue repetition, reference is made to the above.

According to a sixth aspect, there is provided a computer program product comprising instructions which, when the program is executed by a computing device, causes the computing device to carry out the method according to the fifth aspect. The above-mentioned features and advantages of the previous aspects, when applicable, apply to this sixth aspect as well. In order to avoid undue repetition, reference is made to the above.

According to a seventh aspect, there is provided a (non-transitory) computer-readable storage medium. The non-transitory computer-readable storage medium stores one or more programs configured to be executed by one or more processors of a processing system, the one or more programs comprising instructions for performing the method according to the fifth aspect. The above-mentioned features and advantages of the previous aspects, when applicable, apply to this seventh aspect as well. In order to avoid undue repetition, reference is made to the above.

According to an eighth aspect, there is provided a device for controlling a permanent magnet synchronous motor by a closed loop motor control scheme. The device comprises control circuitry. The control circuitry is configured to (i) determine a reference stator flux value in accordance with the method (100) according to the first aspect, based on a present actual dq-axis current value and a present reference dq-axis current value. The control circuitry is further configured to (ii) determine an updated reference dq-axis current value based on a reference torque and the determined reference stator flux value. The control circuitry is further configured to (iii) provide a control signal indicative of the updated reference dq-axis current value to the motor.

The control circuitry may be further configured to (iv) obtain an updated actual dq-axis current value. The control circuitry may be configured to repeat the steps (i)-(iv) for a plurality of loops, wherein for each loop the updated reference dq-axis current value, as determined in a previous loop, corresponds to the present reference dq-axis current value of a present loop, and the updated actual dq-axis current value corresponds to the present actual dq-axis current value of the present loop. Thereby, continuous control of the motor can be provided.

The above-mentioned features and advantages of the previous aspects, when applicable, apply to this eighth aspect as well. In order to avoid undue repetition, reference is made to the above.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

Further embodiments are defined in the dependent claims. These and other features and advantages of the disclosed technology will in the following be further clarified with reference to the embodiments and variants described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method for determining a reference stator flux value in a motor control scheme for use in control of a permanent magnet synchronous motor according to some embodiments.
Figure 2 is a schematic flowchart representation of a method for controlling a permanent magnet synchronous motor by a closed loop motor control scheme according to some embodiments.
Figure 3 is a schematic illustration of a device for determining a reference stator flux value in a motor control scheme for use in control of a permanent magnet synchronous motor according to some embodiments.
Figure 4 is a schematic illustration of a device for controlling a permanent magnet synchronous motor by a closed loop motor control scheme according to some embodiments.
Figure 5 illustrated, by way of example, a motor control scheme of a permanent magnet synchronous motor according to some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus or device comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first defined value could be termed a second defined value, and, similarly, a second defined value could be termed a first defined value, without departing from the scope of the embodiments. The first element and the second element are both defined values, but they are not the same defined value, unless stated otherwise.

As described above, the presently disclosed technology relates to field oriented control (FOC) of permanent magnet synchronous motors (PMSM), and more specifically to principles relating to a flux controller of a motor control scheme for PMSMs, which is based on the ability of a current controller to reach a desired reference signal. This can help increase voltage usability and torque output of the motor, while the current controller stays in control.

In general, a flux controller is configured to output a reference stator flux value (or target flux for short) which represents a desired or requested stator flux value. A subsequent block of the motor control scheme can then determine a reference dq-axis current (or dq current for short) that is needed to reach a certain reference torque and the target flux. The current controller then determines a reference dq-axis voltage based on the reference dq-axis current, to be supplied to the stator terminals. To achieve a certain torque output of the a PMSM, a certain stator flux is needed. The stator flux is in turn achieved by a certain stator voltage. The stator voltage is however limited by what the current controller is able to control, or as mentioned above, by the voltage limit ellipse. In addition, it may be limited by the power supply being used. For example, the stator voltage cannot become larger than a rated voltage of a battery connected to the motor. The present technology provides way of increasing the stator voltage, and in turn the power output, by control of the reference stator flux value. This can be achieved while the current controller stays in control. Loss of control can be a result of operating outside the voltage-limit ellipse. When the rotor spins faster, more back-emf voltage is generated in the stator coils when the magnet of the rotor passes by. This voltage can work against the supplied voltage and hence lower the actual voltage in the coils, and less voltage means less current according to ohms law. To mitigate this effect the proposed technology attempts to counteract the magnetic flux at high speed by imposing more d-axis current. Effectively it emulates having a weaker magnet (at the cost of using more d-axis current), which would induce less back-emf voltage allowing us to impose larger currents with the supplied voltage.

Previous ways of implementing flux controllers to handle the limit of the stator voltage has been based on utilizing a feedback of the stator voltage. Thus, the target flux has previously been determined based on the stator voltage. However, a problem of this is that even though the determined target flux may be attainable from the stator voltage limit point of view, it may lead to a reference dq-axis current that is unattainable for the current controller. As explained in the foregoing, the inventors set out to at least partly solve this problem by taking into account the current controller's ability to regulate the dq currents. Thereby, a flux controller that determines a reference stator flux value that is not above what the motor can reach, can be achieved.

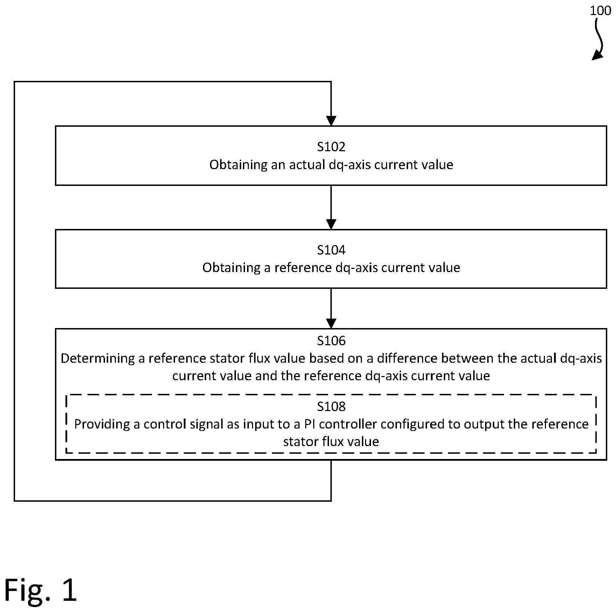

A method 100 and device 300 for determining a reference stator flux value in a motor control scheme for use in control of a PMSM, as well as a method 200 and device 400 for controlling a PMSM by a closed loop control scheme, will now be described with reference to Fig. 1 to 5.

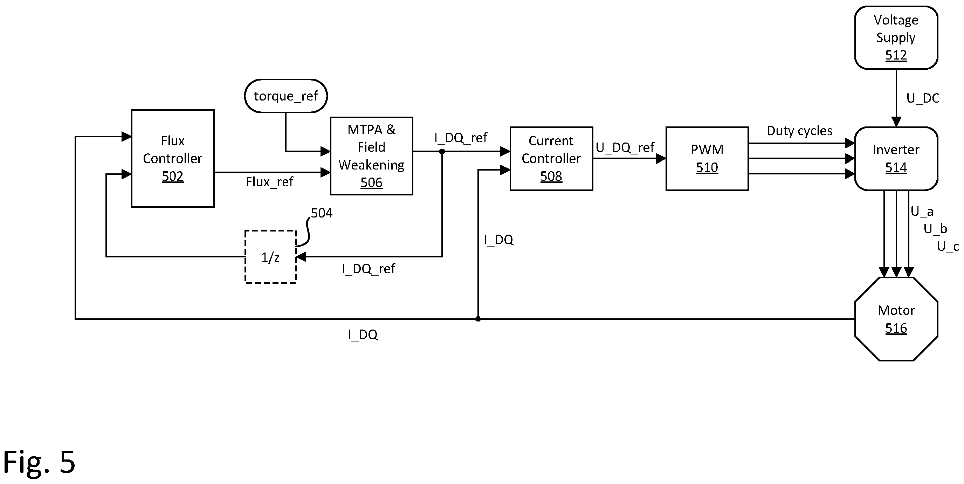

The reference stator flux value (also referred to as "target flux" or "target stator flux") should herein be seen as a requested or desired stator flux value for the motor (or more specifically for the stator of the motor). In a motor control scheme, the reference stator flux value may be fed as input to a block configured to determine reference dq-axis currents for subsequent control of the motor. Figure 5 shows, by way of example, a motor control scheme 500 in which the principles of the disclosed technology can be implemented. The rectangular blocks (i.e. blocks denoted 502 to 510) are used to illustrates parts of the control algorithm of the motor control scheme 500. The remaining blocks (blocks denoted 512 to 516) corresponds to the physical system of the motor control scheme.

The principles of the presently disclosed technology may be implemented in a flux controller 502, as described above. Throughout the present disclosure, the wording "the controller" should be understood as referring to the flux controller 502, unless otherwise stated. Moreover, the flux controller 502 should be understood as any controller configured to perform the steps of the method 100. Even though illustrated as a separate controller in Fig. 5, the flux controller may be implemented as a part of a larger controller configured to perform other functions of the motor control scheme as well, depending on a specific realization. All such variations falls within the scope of the present inventive concept.

As shown in Fig. 5, the flux controller 502 can take as input an actual dq-axis current value (*I_DQ*), and a reference dq-axis current value (*I_DQ_ref*). The actual dq-axis current value may be obtained from the motor 516 (e.g. from measurements of the stator currents). The reference dq-axis current value may be fed back from an output of a MTPA and Field weakening block 506 configured to determine the reference dq-axis current value. In other words, the reference dq-axis current value may be the same reference current that is input to the subsequent current controller. More specifically, the MTPA and Field Weakening block 506 is configured to determine the reference dq-axis current value that is needed to reach a certain reference torque (*torque_ref*) and given the determined reference stator flux value (*Flux_ref*). The MTPA and Field Weakening block 506 may comprise two sub-blocks, one MTPA block and one Field Weakening block. The MTPA (maximum torque per ampere) block is a control strategy employed below base speed of the motor, to obtain maximum torque using minimum stator current. As an alternative to MTPA, a MTPF (maximum torque per flux) may be implemented as well. The MTPA (and MTPF) control is limited by the maximum available voltage of the motor. Therefore, the Field Weakening block can be employed in order to achieve speeds higher than the base speed. To obtain maximum torque while effectively reducing the stator flux at the same time, a maximum torque per volt (MTPV) may also be employed at high speeds. In summary, the MTPA and Field Weakening block 506 outputs the reference dq-axis current value, given a reference torque and reference stator flux value. Due to inaccuracies in look-up-tables of the MTPA (or MTPF) control, and additional noise and errors in the control system, an actual stator flux value may differ slightly from the reference stator flux value. In order to push the actual stator flux value as close as possible to the maximum possible value, the flux controller as described herein can be implemented to increase the reference stator flux value up to the limit of what the current controller can control.

The current controller 508 is configured to transform the reference dq-axis current value outputted from the MTPA and Field Weakening block 506 to a reference dq-axis voltage value, given the reference dq-axis current value and the actual dq-axis current value as input. In other words, the current controller 508 determines desired values for the dq-axis voltage (i.e. reference dq-axis voltage, *U_DQ_ref*), based on desired values of the dq-axis current (i.e. reference dq-axis current, *I_DQ_ref*). More specifically, the current controller 508 can determine the reference dq-axis voltage based on an error between the reference dq-axis current and the actual dq-axis current (*I_DQ*) obtained from the motor 516.

The motor control scheme 500 may further comprise a pulse width modulation (PWM) block 510 configured to transform the reference DQ-axis voltage value (*U_DQ_ref*) outputted from the current controller 508 to duty cycles for operating an inverter 514 of the motor control scheme. The inverter 514 is configured to transform the DC voltage (U_DC) supplied from the voltage supply 512 and the duty cycles into three-phase voltages (U_a, U_b and U_c) which are fed to stator terminals of the motor 516.

As seen in Fig. 5, the flux controller 502 may be implemented as a cascaded controller in relation to the current controller 508. In other words, the flux controller 502 can be seen as an outer control loop, and the current controller 508 as an inner control loop. For this reason, the gain of the reference dq-axis current may advantageously be delayed with an expected response time of the motor system such that it is compared to a resulting current from the same reference dq-axis current, e.g. as represented by the block denoted 504.

Above, a simplified example of how the presently disclosed technology can be implemented has been presented. In the following, the principles of the flux controller 502 will be explained in more detail. The motor control scheme 500 of Fig. 5 should be understood as a simplified view for improved understanding. The motor control scheme 500 may comprise additional blocks and/or variants of the present blocks. As one example, the motor control scheme 500 may comprise blocks for converting the signals between the dq reference frame (or rotating rotor reference frame) and an ABC reference frame (or static stator reference frame). Such variants depend on a specific realization. The present technology is therefore not limited to this example.

Figure 1 is a schematic flowchart representation of the method 100 for determining a reference stator flux value in a motor control scheme for use in control of a permanent magnet synchronous motor (also referred to as just "motor"). The method 100 may be a computer implemented method. Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. For example, the steps denoted S102 and S104 may be performed in any order based on a specific realization, as well at a same time. Such variation will depend on the software and hardware systems chosen and on designer choice. All such variations are within the scope of the present inventive concept. Likewise, software implementations could be accomplished with standard programming techniques with rule-based logic and other logic to accomplish the various steps. Further variants of the method 100 will become apparent from the present disclosure. The herein mentioned and described embodiments are only given as examples and should not be limiting to the present invention. Other solutions, uses, objectives, and functions within the scope of the invention as claimed below described patent claims should be apparent for the person skilled in the art. It should be appreciated that the method 100 of Fig. 1 comprises some steps which are illustrated as boxes in solid lines and some steps which are illustrated in dashed lines. The steps which are shown in solid lines are steps which are comprised in the broadest example embodiment of the method 100. The steps which are comprised in dashed lines are examples of a number of optional steps which may form part of a number of alternative embodiments. It should be appreciated that the optional steps need not be performed in order. Furthermore, it should be appreciated that not all of the steps need to be performed. The example steps may be performed in any order and in any combination.

The method 100 comprises (i) obtaining S102 an actual dq-axis current value. The dq-axis current herein refers to the stator currents in the dq reference frame, i.e. along the direct axis and the quadrature axis. Thus, the dq-axis current can be seen as a d-axis current and a q-axis current. The dq-axis current may also be referred to as stator current.

The actual dq-axis current value should be seen as any data indicative of the value of the actual dq-axis current. Thus, it may be any measured, calculated or otherwise observed value of the actual dq-axis current.

By the wording "actual", e.g. as in "actual dq-axis current", it is herein meant the signal or value (of the dq-axis current) that is actually supplied to or achieved in the motor. More specifically, the actual dq-axis current may be derived or demodulated from signals of the motor 516.

The term "obtaining" is throughout the present disclosure to be interpreted broadly and encompasses receiving, retrieving, collecting, acquiring, estimating, and so forth directly and/or indirectly between two entities configured to be in communication with each other or further with other external entities. However, in some embodiments, the term "obtaining" is to be construed as determining, deriving, forming, computing, etc.

The method 100 further comprises (ii) obtaining S104 a reference dq-axis current value. The wording "reference", e.g. as in "reference dq-axis current", should be understood as a requested or desired signal or value (of the dq-axis current). Thus, the current controller may strive for the actual dq-axis current value to be as close to the reference dq-axis current value as possible. However, due to limitations, inaccuracies, losses, etc. in the control system, the actual and reference dq-axis current values may differ slightly. The reference dq-axis current may be obtained from an output of the MTPA and Field Weakening block, as described above, and shown in Fig. 5.

The method 100 further comprises (iii) determining S106 the reference stator flux value based on a difference between the actual dq-axis current value and the reference dq-axis current value. More specifically, the reference stator flux value may be determined based on a difference between the actual d-axis current value and the reference d-axis current value, and a difference between the actual q-axis current value and the reference q-axis current value. By taking into account the difference between the actual and reference stator currents as feedback to the determination of the reference stator flux value, the reference stator flux value can be determined to compensate for the difference. It can help with increasing the reference stator flux value to what is possible to achieve, while also limiting the reference stator flux value so as not to increase beyond any physical limit. How the reference stator flux value can be determined S106 will be further explained in the following.

The reference stator flux value may be determined S106 in view of a comparison between the difference and a defined threshold value. The defined threshold value may be set as a calibratable threshold defining how much the actual and reference dq currents are allowed to deviate from each other.

Determining S106 the reference stator flux value may comprise providing S108 a control signal indicative of the difference between the actual dq-axis current value and the reference dq-axis current value, as input to a PI controller configured to output the reference stator flux value based on said difference. The PI controller may thus constitute the flux controller as mentioned above. Additionally, the defined threshold value may be provided to the Pl-controller. More specifically, the control signal may be indicative of the comparison between the difference between the actual and reference dq current and the defined threshold value. Thus, a value representative of said comparison may be used as control signal to the controller.

The steps (i)-(iii) (i.e. corresponding to the steps denoted S102 to S106) may be performed iteratively in a closed loop control scheme, as seen also in Fig. 5. The steps of the method 100 as described above may thus be seen as what is performed in one loop of the motor control scheme 500. The steps above may be repeated continuously (or iterated), over a plurality of loops. In each loop, present values for the actual and reference dq-axis current may be obtained. Based on these values, the reference stator flux value for the present loop can be determined. As part of the loop, the motor may be controlled based on the determined reference stator flux value. Thus, the actual and reference dq-axis current values obtained in one loop may be the results of controlling the motor based on a reference stator flux value determined in a previous loop. Put differently, the reference dq-axis current value obtained in a present loop may be determined based on a reference stator flux value of a previous loop and a reference torque. Thus, the reference stator flux value can be seen as being updated in each loop, in relation to a value in a previous loop.

More specifically, in response to the difference being below the defined threshold value, the reference stator flux value of a present loop may be determined S106 by increasing a reference stator flux value of a previous loop of the closed loop control scheme, the previous loop being performed prior to the present loop. The difference being below the defined threshold value may be indicative of there being untapped capability in the motor. Thus, in response to this, the reference stator flux value can be increased to also increase the torque output of the motor.

In response to the difference being above the defined threshold value, the reference stator flux value of a present loop may be determined S106 by decreasing a reference stator flux value of a previous loop of the closed loop control scheme, the previous loop being performed prior to the present loop. The difference being above the defined threshold value may indicate that the current controller is close to reaching the limit of where it starts to lose control. Thus, in response to this, the reference stator flux value can be reduced to allow the current controller to stay (or regain) control. It is to be noted that increasing and decreasing the reference stator flux value can be performed by the PI controller, based on its input signals.

The reference stator flux value may be determined for use in subsequent determination of an updated reference dq-axis current value.

In some embodiments, the flux controller and the current controller (i.e. the functions thereof) runs with the same sample time. However, in other embodiments, the flux controller and the current controller may run at different sample times. For example, the current controller may run with a higher sample time than the flux controller.

Executable instructions for performing these functions are, optionally, included in a non-transitory computer-readable storage medium or other computer program product configured for execution by one or more processors.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

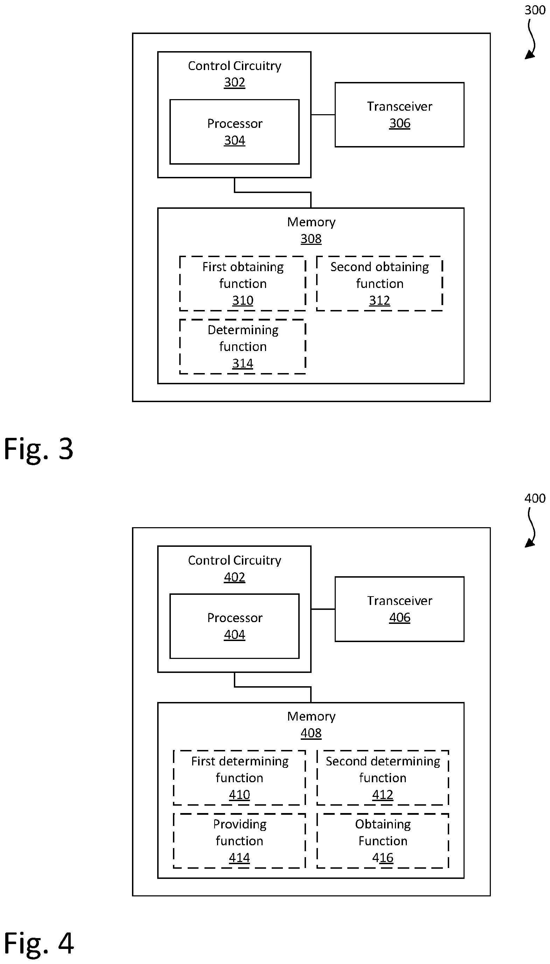

Figure 3 is a schematic illustration of a device 300 for determining a reference stator flux value in a motor control scheme for use in control of a permanent magnet synchronous motor. In particular, the device 300 is configured to perform the techniques of the method 100 described in the foregoing with reference to Fig. 1. The device 300 may e.g. be provided locally in a vehicle (or any other machine or device) comprising the motor, such as in a control system of the motor. However, as can be readily understood, the device 300 may be provided as an external device to the vehicle (or motor), such as a remote server or cloud implementation. In such case, the device 300 may be communicatively connected to the vehicle (or motor) either wirelessly or by wired connection.

The device 300 comprises control circuitry 302. The control circuitry 302 may physically comprise one single circuitry device. Alternatively, the control circuitry 302 may be distributed over several circuitry devices. As an example, the device 300 may share its control circuitry 302 with other parts of the vehicle (or machine), such as a control system of the vehicle. In another example, the device 300 may be a motor control system configured to perform the overall control of the motor.

As shown in the example of Fig. 3, the device 300 may further comprise a transceiver 306 and a memory 308. The control circuitry 302 being communicatively connected to the transceiver 306 and the memory 308. The control circuitry 302 may comprise a data bus, and the control circuitry 302 may communicate with the transceiver 306 and/or the memory 308 via the data bus.

The control circuitry 302 may be configured to carry out overall control of functions and operations of the device 300. The control circuitry 302 may include a processor 304, such as a central processing unit (CPU), microcontroller, or microprocessor. The processor 304 may be configured to execute program code stored in the memory 308, in order to carry out functions and operations of the device 300. The control circuitry 302 is configured to perform the steps of the method 100 as described above in connection with Fig. 1. The steps may be implemented in one or more functions stored in the memory 308. It should be noted that the various function and operation of the device 300 may be implemented in additional functions than those described herein. In addition, one or more of the above functions may be implemented together in a common function.

The transceiver 306 may be configured to enable the device 300 to communicate with other devices. The transceiver 306 may both transmit data from and receive data to the device 300. For example, the device 300 may obtain/send data from/to the motor and resolver. Further, the device 300 may transmit data to other units or systems connected to the motor.

The memory 308 may be a non-transitory computer-readable storage medium. The memory 308 may be one or more of a buffer, a flash memory, a hard drive, a removable media, a volatile memory, a non-volatile memory, a random access memory (RAM), or another suitable device. In a typical arrangement, the memory 308 may include a non-volatile memory for long term data storage and a volatile memory that functions as system memory for the device 300. The memory 308 may exchange data with the circuitry 302 over the data bus. Accompanying control lines and an address bus between the memory 308 and the circuitry 302 also may be present.

Functions and operations of the device 300 may be implemented in the form of executable logic routines (e.g., lines of code, software programs, etc.) that are stored on a non-transitory computer readable recording medium (e.g., the memory 308) of the device 300 and are executed by the circuitry 302 (e.g. using the processor 304). Put differently, when it is stated that the circuitry 302 is configured to execute a specific function, the processor 304 of the circuitry 302 may be configured execute program code portions stored on the memory 308, wherein the stored program code portions correspond to the specific function. Furthermore, the functions and operations of the circuitry 302 may be a stand-alone software application or form a part of a software application that carries out additional tasks related to the circuitry 302. The described functions and operations may be considered a method that the corresponding device is configured to carry out, such as the method 100 discussed above in connection with Fig. 1. Also, while the described functions and operations may be implemented in software, such functionality may as well be carried out via dedicated hardware or firmware, or some combination of one or more of hardware, firmware, and software. In the following, the function and operations of the device 300 is described.

The control circuitry 302 is configured to obtain an actual dq-axis current value. This may be performed e.g. by execution of a first obtaining function 310.

The control circuitry 302 is further configured to obtain a reference dq-axis current value. This may be performed e.g. by execution of a second obtaining function 312. It is to be noted that the first and second obtaining function 310, 312 may be implemented as a common obtaining function.

The control circuitry 302 is further configured to determine the reference stator flux value based on a difference between the actual dq-axis current value and the reference dq-axis current value. This may be performed e.g. by execution of a determining function 314.

The control circuitry 302 may be configured to perform the above described functions iteratively, in a closed loop control scheme. More specifically, the device 300 may be configured to implement the flux controller 502, or the entire motor control scheme 500, as described above in connection with Fig. 5.

It should be noted that any principles, features, aspects, and advantages of the method 100 as described above in connection with Fig. 1, are applicable also to the device 300 described herein. In order to avoid undue repetition, reference is made to the above.

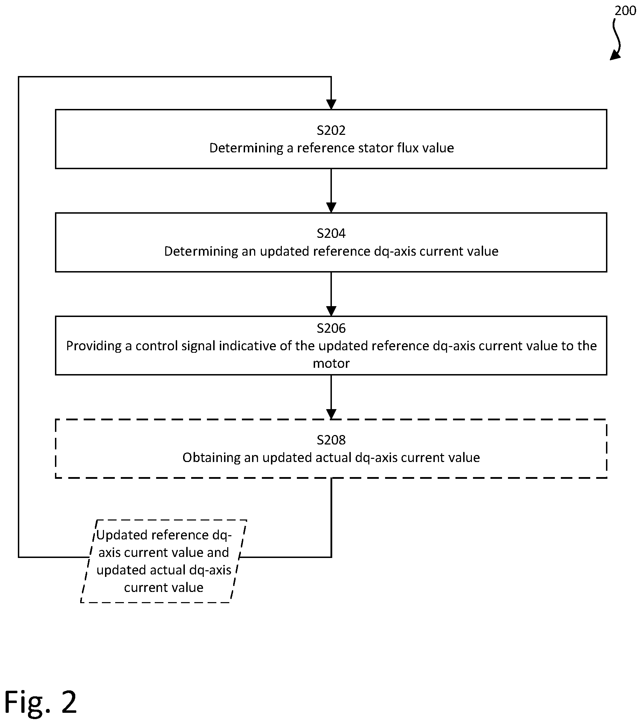

Figure 2 is a schematic flowchart representation of the method 200 for controlling a permanent magnet synchronous motor by a closed loop motor control scheme. The method 200 may be a computer implemented method. The motor control scheme may be the motor control scheme 500 as presented in connection with Fig. 5.

Below, the different steps of the method 200 are described in more detail. Even though illustrated in a specific order, the steps of the method 200 may be performed in any suitable order as well as multiple times. Thus, although Fig. 2 may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the present inventive concept. Likewise, software implementations could be accomplished with standard programming techniques with rule-based logic and other logic to accomplish the various steps. Further variants of the method 200 will become apparent from the present disclosure. The herein mentioned and described embodiments are only given as examples and should not be limiting to the present invention. Other solutions, uses, objectives, and functions within the scope of the invention as claimed below described patent claims should be apparent for the person skilled in the art. It should be appreciated that the method 200 of Fig. 2 comprises some steps which are illustrated as boxes in solid lines and some steps which are illustrated in dashed lines. The steps which are shown in solid lines are steps which are comprised in the broadest example embodiment of the method 200. The steps which are comprised in dashed lines are examples of a number of optional steps which may form part of a number of alternative embodiments. It should be appreciated that the optional steps need not be performed in order. Furthermore, it should be appreciated that not all of the steps need to be performed. The example steps may be performed in any order and in any combination.

The method 200 comprises (i) determining S202 a reference stator flux value in accordance with the method 100 described above in connection with Fig. 1. The reference stator flux value is determined based on a present actual dq-axis current value and a present reference dq-axis current value. The step of determining S202 the reference stator flux value may be performed by the flux controller 502 of the motor control scheme 500.

The method 200 further comprises (ii) determining S204 an updated reference dq-axis current value based on a reference torque and the determined reference stator flux value. The updated reference dq-axis current value should be seen as an updated or adjusted value from the present reference dq-axis current used in determining S202 the reference stator flux value. The step of determining S204 the updated reference dq-axis current value may e.g. be performed by the MTPA and Field Weakening block 506 of the motor control scheme 500.

The method 200 further comprises (iii) providing S206 a control signal indicative of the updated reference dq-axis current value to the motor. The control signal may be provided to the motor 516 through the current controller 508, the PWM 510 and the inverter 514.

The method 200 may further comprise (iv) obtaining S208 an updated actual dq-axis current value. The updated actual dq-axis current value may be the result of controlling the motor based on the updated reference dq-axis current. The updated actual dq-axis current value may be obtained S208 from the motor, e.g. through measurements or demodulation of signals from the motor.

Moreover, the method 200 may comprise repeating the steps (i)-(iv) for a plurality of loops, wherein for each loop, the updated reference dq-axis current value as determined in a previous loop corresponds to the present reference dq-axis current value of a present loop, and the updated actual dq-axis current value corresponds to the present actual dq-axis current value of the present loop, thereby providing continuous control of the motor. The steps (i)-(iv) can thus be iterated for a number of iterations. In other words, in each loop, the reference stator flux value is determined S202 based on a reference dq-axis current value and an actual dq-axis current value from the previous loop. An updated reference dq-axis current value is then determined based on the reference stator flux value, and used for control of the motor (i.e. through providing as a control signal to the motor). As an effect of controlling the motor, updated values for the reference dq-axis current and the actual dq-axis current can then be obtained and fed as input to the next loop.

Executable instructions for performing these functions are, optionally, included in a non-transitory computer-readable storage medium or other computer program product configured for execution by one or more processors.

Figure 4 is a schematic illustration of a device 400, for controlling a permanent magnet synchronous motor by a closed loop motor control scheme, in accordance with some embodiments. The device 400 may be configured to perform the method 200 as described in connection with Fig. 2.

It should be noted that the principles and aspects, of the device 300 as described above in connection with Fig. 3, are applicable also to the device 400 as described herein. For instance, the device 400 comprises control circuitry 402 having a processor 404 as the device 300 described above. Moreover, the device 400 may comprise a transceiver 406, and a memory 408. The two devices may be provided as two separate devices, or as one common device. Thus, a common device performing the principles of both the device 300 described above, and the device 400 described below may be provided. In order to avoid undue repetition, reference is made to the above. In the following, focus will instead be on functionalities that differs from the device 300 as described above. The device 400 described herein may be configured to implement the functions of the motor control scheme 500 as described above.

The control circuitry 402 is configured (i) determine a reference stator flux value in accordance with the method 100 as described above in connection with Fig. 1. The reference stator flux value is determined based on a present actual dq-axis current value and a present reference dq-axis current value. This may be performed e.g. by execution of a first determining function 410.

The control circuitry 402 is further configured to (ii) determine an updated reference dq-axis current value based on a reference torque and the determined reference stator flux value. This may be performed e.g. by execution of a second determining function 412.

The control circuitry 402 is further configured to (iii) provide a control signal indicative of the updated reference dq-axis current value to the motor. This may be performed e.g. by execution of a providing function 414.

The control circuitry may be further configured to (iv) obtain an updated actual dq-axis current value. This may be performed e.g. by execution of an obtaining function 416.

Moreover, the control circuitry may be configured to repeat the steps (i)-(iv) for a plurality of loops, wherein for each loop, the updated reference dq-axis current value as determined in a previous loop corresponds to the present reference dq-axis current value of a present loop, and the updated actual dq-axis current value corresponds to the present actual dq-axis current value of the present loop, thereby providing continuous control of the motor.

It should be noted that the principles, features, aspects, and advantages of the method 100 as described above in connection with Fig. 2, are applicable also to the device 400 as described herein. In order to avoid undue repetition, reference is made to the above.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the invention may be at least in part implemented by means of both hardware and software, and that the same item of hardware may represent several "means" or "units".

## Claims

1. A method (100) for determining a reference stator flux value in a motor control scheme for use in control of a permanent magnet synchronous motor, the method (100) comprising:
(i) obtaining (S102) an actual dq-axis current value;
(ii) obtaining (S104) a reference dq-axis current value; and
(iii) determining (S106) the reference stator flux value based on a difference between the actual dq-axis current value and the reference dq-axis current value.

2. The method (100) according to claim 1, wherein the reference stator flux value is determined (S106) in view of a comparison between the difference and a defined threshold value.

3. The method (100) according to claim 2, wherein determining (S106) the reference stator flux value comprises providing (S108) a control signal indicative of the comparison between the difference and the defined threshold value, as input to a PI controller configured to output the reference stator flux value based on said comparison.

4. The method (100) according to any one of the claims 1 to 3, wherein the steps (i)-(iii) are performed iteratively in a closed loop control scheme.

5. The method (100) according to claim 4, wherein, in response to the difference being below the defined threshold value, the reference stator flux value of a present loop is determined (S106) by increasing a reference stator flux value of a previous loop of the closed loop control scheme, the previous loop being performed prior to the present loop.

6. The method (100) according to claim 4 or 5, wherein, in response to the difference being above the defined threshold value, the reference stator flux value of a present loop is determined (S106) by decreasing a reference stator flux value of a previous loop of the closed loop control scheme, the previous loop being performed prior to the present loop.

7. The method (100) according to any one of the claims 4 to 6, wherein the reference dq-axis current value obtained in a present loop is determined based on a reference stator flux value of a previous loop and a reference torque, the previous loop being performed prior to the present loop.

8. The method (100) according to any one of the claims 1 to 7, wherein the reference stator flux value is determined for use in subsequent determination of an updated reference dq-axis current value.

9. A computer program product comprising instructions, which when the program is executed by a computing device, causes the computing device to carry out the method (100) according to any one of the claims 1 to 8.

10. A device (300) for determining a reference stator flux value in a motor control scheme for use in control of a permanent magnet synchronous motor, the device (300) comprising control circuitry (302) configured to:
obtain an actual dq-axis current value;
obtain a reference dq-axis current value; and
determine the reference stator flux value based on a difference between the actual dq-axis current value and the reference dq-axis current value.

11. A method (200) for controlling a permanent magnet synchronous motor by a closed loop motor control scheme, the method (200) comprising:
(i) determining (S202) a reference stator flux value in accordance with the method (100) according to any one of the claims 1 to 8, based on a present actual dq-axis current value and a present reference dq-axis current value;
(ii) determining (S204) an updated reference dq-axis current value based on a reference torque and the determined reference stator flux value; and
(iii) providing (S206) a control signal indicative of the updated reference dq-axis current value to the motor.

12. The method (200) according to claim 11, further comprising (iv) obtaining (S208) an updated actual dq-axis current value, and
repeating the steps (i)-(iv) for a plurality of loops, wherein for each loop the updated reference dq-axis current value as determined in a previous loop corresponds to the present reference dq-axis current value of a present loop, and the updated actual dq-axis current value corresponds to the present actual dq-axis current value of the present loop, thereby providing continuous control of the motor.

13. A computer program product comprising instructions, which when the program is executed by a computing device, causes the computing device to carry out the method (200) according to claim 11 or 12.

14. A device for controlling a permanent magnet synchronous motor by a closed loop motor control scheme, the device comprising control circuitry configured to:
(i) determine a reference stator flux value in accordance with the method (100) according to any one of the claims 1 to 8, based on a present actual dq-axis current value and a present reference dq-axis current value;
(ii) determine an updated reference dq-axis current value based on a reference torque and the determined reference stator flux value; and
(iii) provide a control signal indicative of the updated reference dq-axis current value to the motor.

15. The device according to claim 14, wherein the control circuitry is further configured to (iv) obtain an updated actual dq-axis current value, and
wherein the control circuitry is configured to repeat the steps (i)-(iv) for a plurality of loops, wherein for each loop the updated reference dq-axis current value as determined in a previous loop corresponds to the present reference dq-axis current value of a present loop, and the updated actual dq-axis current value corresponds to the present actual dq-axis current value of the present loop, thereby providing continuous control of the motor.
